# EUROPEAN PATENT APPLICATION

(11) **EP 4 258 289 A1**
(43) Date of publication of application: **11.10.2023**
(21) Application number: 21855276.8
(22) Date of filing: 30.06.2021
(51) Int. Cl.: G21D 3/00, G21D 3/06

(54) **NUCLEAR POWER PLANT INTELLIGENT TECHNICAL SPECIFICATION METHOD AND SYSTEM**

(30) Priority: 17.11.2020 CN 202011284435
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: PING, Jialin, Shenzhen, Guangdong 518124 (CN); LI, Jixue, Shenzhen, Guangdong 518124 (CN); PENG, Huaqing, Shenzhen, Guangdong 518124 (CN); XIE, Hongyun, Shenzhen, Guangdong 518124 (CN); LU, Chao, Shenzhen, Guangdong 518124 (CN); LI, Xianmin, Shenzhen, Guangdong 518124 (CN); WANG, Chunbing, Shenzhen, Guangdong 518124 (CN); ZHANG, Chao, Shenzhen, Guangdong 518124 (CN); FAN, Yipeng, Shenzhen, Guangdong 518124 (CN); DUAN, Qizhi, Shenzhen, Guangdong 518124 (CN)
(74) Representative: Greaves Brewster LLP
(86) International application number: PCT/CN2021/103631
(87) International publication number: WO 2022/033223

(57) **Abstract**

The present invention provides nuclear power plant intelligent technical specification method and system. The nuclear power plant intelligent technical specification method includes the steps of: obtaining a predetermined operating signal and a device state of a nuclear power plant by means of a nuclear power plant KNS system (S101); determining an operating condition of the nuclear power plant according to the device state (S102); determining whether to trigger a predetermined event according to the operating signal, the operating condition and a preset threshold (S103); upon determining to trigger a predetermined event, activating the predetermined event and triggering processing measures and supervision requirements corresponding to the event, and simultaneously starting a timer to remind an operator to complete the processing measures required by specification within a specified time (S104). The present nuclear power plant intelligent technical specification method and system may intuitively reflect safety indicators of the nuclear power plant, and help an operator to handle the event quickly, so that the safety of the nuclear power plant is improved, the economy and the availability of the nuclear power unit are improved, and the market economy value is high.

## Description

### FIELD OF THE INVENTION

The present invention generally relates to nuclear power plants and, more particularly, relates to a nuclear power plant intelligent technical specification method and system.

### BACKGROUND OF THE INVENTION

The nuclear power plant technical specification is an important part for operation of a nuclear power plant, which plays an important role in the safe and economic operation of the nuclear power plant. The general objective of the safe operation of the nuclear power plant is to maintain the safety level determined by the design, and improve the safety level according to the experience feedback in operation. In order to achieve the objective, the technical specifications for nuclear power plant focus on the technical requirements to be followed during the operation of the nuclear power units, to ensure that the safety limits can be observed and ensure the safety of nuclear power units in the life cycle.

The operation technical specification has three functions: first, to define the normal operation boundary of the reactor, to ensure that the nuclear power unit is operating within the range of safety limits and accident assumptions; second, provide the availability and operability of the control, protection systems and specialized security facilities of three barriers; and, third, when the required device and systems are not available, or when a security-related parameter changes abnormally, measures required are to be taken. Because of the large number of device and parameters in nuclear power plant, the number of technical specification is very large. When a deviation from the technical specification occurs, the operator needs to call the relevant technical specification as soon as possible.

The technical specifications in the prior art are mainly paper-based technical specifications, which have the following disadvantages:
1. The number of pages of technical specification documents is large, after the occurrence of the event, it will take the operator long time to find and call the relevant technical specifications.
2. Different events involve different operating conditions and changes of device parameters, and different technical specifications are used, so there are certain risks in identification.
3. After the event, manual timing is needed, and there is a certain degree of imprecision, which may lead to the expansion of event processing.

### SUMMARY OF THE INVENTION

One object of the present invention is to provide a nuclear power plant intelligent technical specification method and system, which can improve the safety of the nuclear power plant and the economy and availability of the nuclear power units.

According to one embodiment of the present invention, a nuclear power plant intelligent technical specification method includes the steps of:
obtaining a predetermined operating signal and a device state of a nuclear power plant by means of a nuclear power plant KNS system;
determining an operating condition of the nuclear power plant according to the device state;
determining whether to trigger a predetermined event according to the operating signal, the operating condition and a preset threshold; and
upon determining to trigger the predetermined event, activating the predetermined event and triggering processing measures and supervision requirements corresponding to the event, and simultaneously starting a timer to remind an operator to complete the processing measures required by the specification within a specified time.

According to one aspect of the present invention, the operating signal includes nuclear power plant operating mode signal, instrument unavailable signal, device unavailable signal, system single column unavailable signal, nuclear power plant main parameter signal, and manual input signal.

According to one aspect of the present invention, the operating condition includes reactor power operation mode, steam generator cooling normal shutdown mode, RIS/RHR cooling normal shutdown mode, maintaining shutdown mode, refueling shutdown mode, and reactor complete unloading mode.

According to one aspect of the present invention, the nuclear power plant intelligent technical specification method further includes the step of establishing a nuclear power plant technical specification database according to specific content of the nuclear power plant technical specification and requirements of human-computer interaction, wherein the technical specifications database adopts the existing database of the nuclear power plant KNS system, including real-time database and relational database, where thresholds, event start times and event duration timings adopt real-time database for changing dynamically after triggering; while the systems involved, the corresponding operating condition, the definition name of the triggered event, the concrete measures of the event and the supervision requirement of the event adopt the relational database.

According to one aspect of the present invention, the nuclear power plant intelligent technical specification method further includes the step of establishing a two-layer man-machine interface of the nuclear power plant technical specification according to the concrete content of the nuclear power plant technical specification and the requirement of man-machine interaction, wherein the two-layer man-machine interaction interface is associated with an intelligent technical specification judging system and technical specification database, to display the information activated by the technical specification database on the two-layer man-machine interaction interface, the information displayed comprises event, threshold, event start time, event timing, corresponding operation mode, event measures and event supervision requirements as required by the technical specification.

According to one aspect of the present invention, the two-layer man-machine interaction interface has the function of displaying cause and the path of the event triggering, when an event is triggered, according to the triggered event result, the reverse deduction of the cause of the event triggering is displayed, and the source of the event triggering is clarified, thereby shortening the time to judge the event, shortening the time to deal with the event, improving the safe operation level of the nuclear power plant, and improving the economic efficiency of the nuclear power plant.

According to another embodiment of the present invention, a nuclear power plant intelligent technical specification system includes:
an input module, for obtaining a predetermined operating signal and a device state of a nuclear power plant by means of a nuclear power plant KNS system;
an operating condition judging module, for determining an operating condition of the nuclear power plant according to the device state;
a comprehensive judging module, for determining whether to trigger a predetermined event according to the operating signal, the operating condition, and a preset threshold; and
a processing module, upon determining to trigger a predetermined event, for activating the predetermined event and triggering processing measures and supervision requirements corresponding to the event, and simultaneously starting a timer to remind an operator to complete the processing measures of specification requirements within a specified time.

According to one aspect of the present invention, the nuclear power plant intelligent technical specification system further includes a nuclear power plant technical specification database module, for establishing a nuclear power plant technical specification database according to specific content of the nuclear power plant technical specification and requirements of human-computer interaction, wherein the technical specifications database adopts the existing database of the nuclear power plant KNS system, including real-time database and relational database, where thresholds, event start times and event duration timings adopt real-time database for changing dynamically after triggering; while the systems involved, the corresponding operating condition, the definition name of the triggered event, the concrete measures of the event and the supervision requirement of the event adopt the relational database.

According to one aspect of the present invention, the nuclear power plant intelligent technical specification system further includes a human-computer interaction module, for establishing a two-layer man-machine interface of the nuclear power plant technical specification according to the concrete content of the nuclear power plant technical specification and the requirement of man-machine interaction, wherein the two-layer man-machine interaction interface is associated with an intelligent technical specification judging system and technical specification database, to display the information activated by the technical specification database on the two-layer man-machine interaction interface, the information displayed includes event, threshold, event start time, event timing, corresponding operation mode, event measures and event supervision requirements as required by the technical specification.

According to one aspect of the present invention, the two-layer man-machine interaction interface has the function of displaying cause and the path of the event triggering, when an event is triggered, according to the triggered event result, the reverse deduction of the cause of the event triggering is displayed, and the source of the event triggering is clarified, thereby shortening the time to judge the event, shortening the time to deal with the event, improving the safe operation level of the nuclear power plant, and improving the economic efficiency of the nuclear power plant.

In view of the foregoing, the nuclear power plant intelligent technical specification method and system provided in the embodiment of the present invention can be used to conduct the operation signal of the nuclear power plant by establishing technical specification rules, to intelligently judge whether abnormal time occurs, and promptly notify the operator after the abnormal event occurs to the nuclear power plant, which is advantageous to the operator to judge the nuclear power plant event situation quickly, reduces the judge time of the operator, reduces the misjudge probability of the operator. In addition, the embodiment of the present invention can also directly reflect the safety index of the nuclear power plant, which is beneficial for the operator to deal with the event quickly, thereby improving the safety of the nuclear power plant, improving the economic efficiency and the availability of the nuclear power unit, and the market economic value is high.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 is a flow chart of a nuclear power plant intelligent technical specification method according to a first embodiment of the present invention;
Fig. 2 is a block diagram showing judging the operating condition of a nuclear power plant;
Fig. 3 is a block diagram showing judging principle of the nuclear power plant technical specifications;
Fig. 4 is a data structural diagram of the nuclear power plant technical specification database;
Fig. 5 is an interactive diagram showing the interaction of a database and an intelligent technical specification judge system with a human-computer interface;
Fig. 6 is a block diagram of a nuclear power plant intelligent technical specification system according to a second embodiment of the present invention.

### DETAILED DESCRIPTION OF THE INVENTION

The technical solution of the embodiments of the present invention will be described clearly and completely in view of the attached drawings, in which only part of not all embodiments of the present invention are shown. Based on the embodiments of the present invention as described, other embodiments obtained by one ordinary skilled in the art without creative work fall within the scope of the present invention.

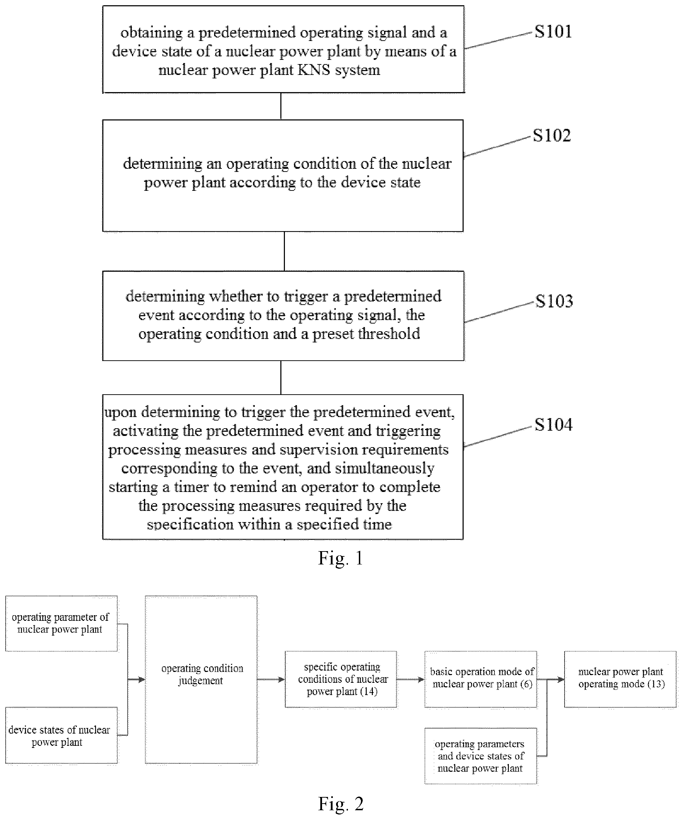

Referring to Fig. 1, a first embodiment of the present invention provides a nuclear power plant intelligent technical specification method, which can be performed by a nuclear power plant intelligent technical specification device (hereinafter referred to as the specification device), so as to achieve the following steps:
S101, obtaining a predetermined operating signal and a device state of a nuclear power plant by means of a nuclear power plant KNS system.

In the present embodiment, the specification device may be a computer, a desktop computer, a workstation, or a server, wherein a predetermined software system, such as an intelligent technical specification judging system, is installed in the specification device, in order to realize the nuclear power plant intelligent technical specification method of the present embodiment via the system.

In the present embodiment, the specification device can be connected to the KNS (real-time information supervision system) of a nuclear power plant, and obtain the predetermined operating signal and device state of the nuclear power plant from the KNS system.

The operating signal includes nuclear power plant operating mode signal, instrument unavailable signal, device unavailable signal, system single column unavailable signal, nuclear power plant main parameter signal, and manual input signal, depending on the actual requirement and will not be limited in the present invention.

S 102, determining an operating condition of the nuclear power plant according to the device state.

In the present embodiment, the measures required to be taken are different under different operating modes. Therefore, the operating conditions of the nuclear power plant shall be judged first.

Specifically, the specification device takes the device state obtained from the KNS system as input, calculates according to the requirements of different operating conditions of the power plant, and determines the current operating conditions of the nuclear power plant after comprehensive consideration, thereby obtaining the basic mode of the nuclear power plant through analysis of the operating conditions.

For example, in general, the basic modes of the nuclear power plant includes reactor power operation mode (RP), steam generator cooling normal shutdown mode (NS/SG), RIS/RHR cooling normal shutdown mode (NS/RIS-RHR), maintaining shutdown mode (MCS), refueling shutdown mode (RCS) and reactor complete unloading mode (RCD).

There are 13 operating modes based on the six basic modes, the basic modes and the operating modes can be obtained by calculating the main operating parameters and device states of nuclear power plants, as shown in Fig. 2.

S 103 determining whether to trigger a predetermined event according to the operating signal, the operating condition and a preset threshold.

In the present embodiment, the specification device establishes a nuclear power plant technical specification database. The technical specification database uses the existing database of the nuclear power plant KNS system, including the real-time database and the relational database. The threshold, the event start times, the event duration timings adopt real-time database for changing dynamically after triggering. The involved system, the corresponding operating mode, the specific event definition name triggered, the specific measures for the event and the supervision requirements of the event adopt the relational database. Manual input is also included in the relational database.

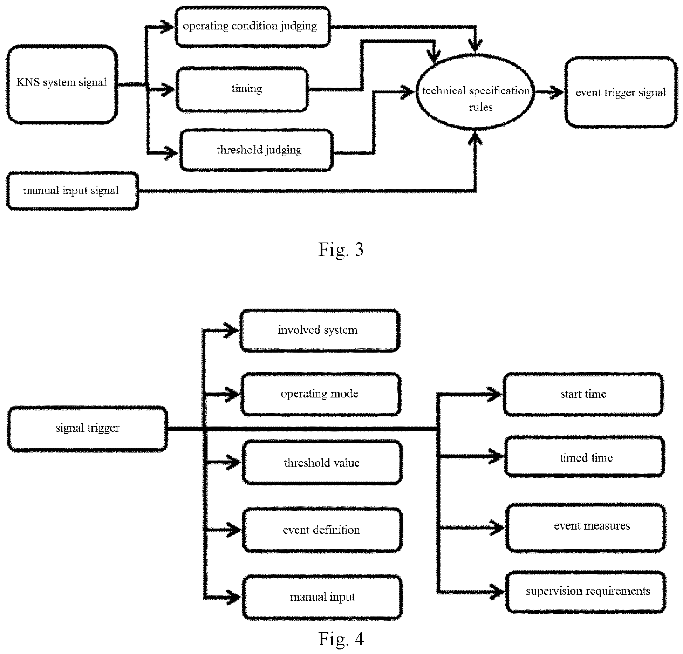

Referring to Fig. 3, in the present embodiment, after obtaining an operating signal, an operating condition, and a preset threshold, the specification device invokes technical specification rule defined in the intelligent technical specification judging system, the configuration information defined by the technical specification rules is used to match the operating signal, the operating conditions and the preset thresholds, to determine whether the predetermined events are triggered such as whether a leak event is triggered, and operation failure event. The technical specification rules define the corresponding operating conditions, the operating signals, and the thresholds for each event. In matching, according to the operating signal, the operating condition and the preset threshold, each rule of the technical specification can be matched one by one, to determine whether the preset event is triggered.

S104, upon determining to trigger the predetermined event, activating the predetermined event and triggering processing measures and supervision requirements corresponding to the event, and simultaneously starting a timer to remind an operator to complete the processing measures required by the specification within a specified time.

As shown in Fig. 4, in the present embodiment, the technical specification rules further define the handling measures, the supervision requirements, and the processing times for each event. When the trigger time is judged, the specification device records the current time as the start time and starts the timer, thereby reminding the operator to complete the treatment measures required by the specification within the specified processing time.

In view of the foregoing, the nuclear power plant intelligent technical specification method provided in the embodiment of the present invention can be used to conduct the operation signal of the nuclear power plant by establishing technical specification rules, to intelligently judge whether abnormal time occurs, and promptly notify the operator after the abnormal event occurs to the nuclear power plant, which is advantageous to the operator to judge the nuclear power plant event situation quickly, reduces the judge time of the operator, reduces the misjudge probability of the operator. In addition, the embodiment of the present invention can also directly reflect the safety index of the nuclear power plant, which is beneficial for the operator to deal with the event quickly, thereby improving the safety of the nuclear power plant, improving the economic efficiency and the availability of the nuclear power unit, and the market economic value is high.

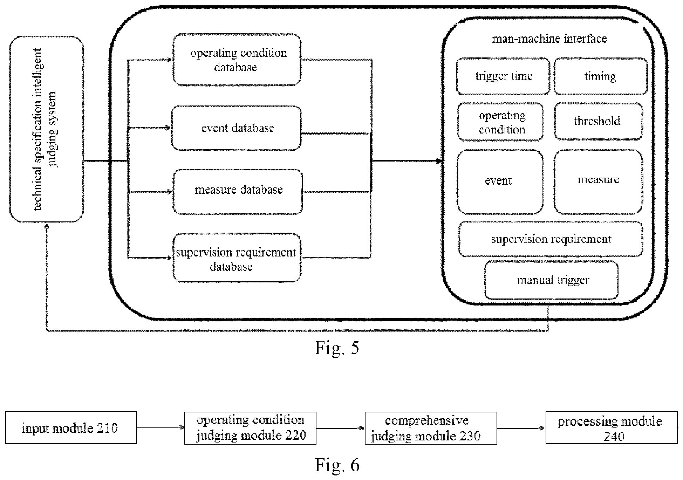

Referring to Fig. 5, according to one embodiment of the present invention, the nuclear power plant intelligent technical specification method further includes the step of establishing a two-layer man-machine interface of the nuclear power plant technical specification according to the concrete content of the nuclear power plant technical specification and the requirement of man-machine interaction, wherein the two-layer man-machine interaction interface is associated with an intelligent technical specification judging system and technical specification database, to display the information activated by the technical specification database on the two-layer man-machine interaction interface, the information displayed includes the event, the threshold, the event start time, the event timing, the corresponding operation mode, the event measures and the event supervision requirements as required by the technical specification.

In addition, the two-layer man-machine interaction interface has the function of displaying the cause and path of the event triggering. When an event is triggered, according to the triggered event result, the reverse deduction of the cause of the event triggering is displayed, and the source of the event triggering is clarified, thereby shortening the time to judge the event, shortening the time to deal with the event, improving the safe operation level of the nuclear power plant, and improving the economic efficiency of the nuclear power plant.

Referring to Fig. 6, a second embodiment of the present invention provides a nuclear power plant intelligent technical specification system, including:
an input module 210, for obtaining a predetermined operating signal and a device state of a nuclear power plant by means of a nuclear power plant KNS system;
an operating condition judging module 220, for determining an operating condition of the nuclear power plant according to the device state;
a comprehensive judging module 230, for determining whether to trigger a predetermined event according to the operating signal, the operating condition, and a preset threshold; and
a processing module 240, upon determining to trigger a predetermined event, for activating the predetermined event and triggering processing measures and supervision requirements corresponding to the event, and simultaneously starting a timer to remind an operator to complete the processing measures of specification requirements within a specified time.

According to one embodiment of the present invention, the nuclear power plant intelligent technical specification system further includes a nuclear power plant technical specification database module, for establishing a nuclear power plant technical specification database according to specific content of the nuclear power plant technical specification and requirements of human-computer interaction, wherein the technical specifications database adopts the existing database of the nuclear power plant KNS system, including real-time database and relational database. The thresholds, the event start times and event duration timings adopt real-time database for changing dynamically after triggering. The systems involved, the corresponding operating condition, the definition name of the triggered event, the concrete measures of the event and the supervision requirement of the event adopt the relational database.

According to one embodiment of the present invention, the nuclear power plant intelligent technical specification system further includes a human-computer interaction module, for establishing a two-layer man-machine interface of the nuclear power plant technical specification according to the concrete content of the nuclear power plant technical specification and the requirement of man-machine interaction. The two-layer man-machine interaction interface is associated with an intelligent technical specification judging system and the technical specification database, to display the information activated by the technical specification database on the two-layer man-machine interaction interface. The information displayed includes event, threshold, event start time, event timing, corresponding operation mode, event measures and event supervision requirements as required by the technical specification.

According to one embodiment of the present invention, the two-layer man-machine interaction interface has the function of displaying cause and the path of the event triggering. When an event is triggered, according to the triggered event result, the reverse deduction of the cause of the event triggering is displayed, and the source of the event triggering is clarified, thereby shortening the time to judge the event, shortening the time to deal with the event, improving the safe operation level of the nuclear power plant, and improving the economic efficiency of the nuclear power plant.

Illustratively, each process of the embodiment of the present invention may be accomplished by executing executable code by a processor. The executable code may be divided into one or more modules. One or more modules are stored in the memory and executed by the processor to complete the present invention.

The processor can be a central processing unit (CPU), or other general-purpose processors, digital signal processors (DSPs), application specific integrated circuit (ASIC), field-programmable gate arrays (FPGA) or other programmable logic device, discrete gates or transistor logic devices, discrete hardware component. A general-purpose processor can be a microprocessor or any regular processor.

The memory may be used to store the computer program and/or module. The processor realizes various functions of the platform by operating or executing the computer program and/or module stored in the memory, and calling the data stored in the memory. The memory can mainly include a storage program area and a storage data area, wherein the storage program area can store an operating system; The storage data area can store data created based on usage (such as audio data and text message data). In addition, the memory may include high-speed random-access memory, as well as non-volatile random-access memory, including a hard disk, memory, plug-in hard disk, smart media card (SMC), secure digital (SD) card, flash card, at least one disk storage device, flash memory device, or other volatile solid state storage device.

The realized module can be stored in a computer readable storage medium if it is realized as a software function unit and sold or used as an independent product. Based on this understanding, the present invention realizes all or part of the flow in the embodiments, and can also be completed by a computer program to instruct related hardware, the computer program can be stored in a computer readable memory medium, and the steps of each embodiment can be realized when the computer program is executed by a processor. The computer program includes computer program code, which may be in the form of source code, object code, executable file, or some intermediate form. The computer readable medium may include any entity or device, a recording medium, a U disk, a removable hard disk, a disk, an optical disk, a computer memory, a read-only memory (ROM), a random-access memory(RAM), an electrical carrier signal, a telecommunications signal, a software distribution medium capable of carrying the computer program code. It should be noted that the contents of the computer-readable media may be added to or subtracted from the requirements of legislation and patent practice in jurisdictions, for example, in some jurisdictions, in accordance with legislation and patent practice, computer-readable media do not include electrical carrier signals and telecommunication signals.

It should be noted that, the embodiments as described above are only illustrative, in which the units described as separate parts may or may not be physically separated, the parts displayed as units may or may not be physical units, either located in one place or distributed over multiple network units. Some or all of the modules can be selected according to the actual needs to realize the objects of the embodiment. In addition, the connection relationship between modules in the device embodiment of the present invention indicates that there is a communication connection between them, which can be realized as one or more communication buses or signal lines. One ordinary skilled in the art can understand and implement without creative work.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A nuclear power plant intelligent technical specification method, **characterized in that**, the nuclear power plant intelligent technical specification method comprises the steps of:
(S101) obtaining a predetermined operating signal and a device state of a nuclear power plant by means of a nuclear power plant KNS system;
(S102) determining an operating condition of the nuclear power plant according to the device state;
(S103) determining whether to trigger a predetermined event according to the operating signal, the operating condition and a preset threshold; and
(S104) upon determining to trigger the predetermined event, activating the predetermined event and triggering processing measures and supervision requirements corresponding to the event, and simultaneously starting a timer to remind an operator to complete the processing measures required by the specification within a specified time.

2. The nuclear power plant intelligent technical specification method according to claim 1, **characterized in that**, the operating signal comprises nuclear power plant operating mode signal, instrument unavailable signal, device unavailable signal, system single column unavailable signal, nuclear power plant main parameter signal, and manual input signal.

3. The nuclear power plant intelligent technical specification method according to claim 1, **characterized in that**, the operating condition comprises reactor power operation mode, steam generator cooling normal shutdown mode, RIS/RHR cooling normal shutdown mode, maintaining shutdown mode, refueling shutdown mode, and reactor complete unloading mode.

4. The nuclear power plant intelligent technical specification method according to claim 1, **characterized in that**, the nuclear power plant intelligent technical specification method further comprises the step of establishing a nuclear power plant technical specification database according to specific content of the nuclear power plant technical specification and requirements of human-computer interaction, wherein the technical specifications database adopts the existing database of the nuclear power plant KNS system, comprising real-time database and relational database, where thresholds, event start times and event duration timings adopt real-time database for changing dynamically after triggering; while the systems involved, the corresponding operating condition, the definition name of the triggered event, the concrete measures of the event and the supervision requirement of the event adopt the relational database.

5. The nuclear power plant intelligent technical specification method according to claim 4, **characterized in that**, the nuclear power plant intelligent technical specification method further comprises the step of establishing a two-layer man-machine interface of the nuclear power plant technical specification according to the concrete content of the nuclear power plant technical specification and the requirement of man-machine interaction, wherein the two-layer man-machine interaction interface is associated with an intelligent technical specification judging system and technical specification database, to display the information activated by the technical specification database on the two-layer man-machine interaction interface, the information displayed comprises event, threshold, event start time, event timing, corresponding operation mode, event measures and event supervision requirements as required by the technical specification.

6. The nuclear power plant intelligent technical specification method according to claim 5, **characterized in that**, the two-layer man-machine interaction interface has the function of displaying cause and the path of the event triggering, when an event is triggered, according to the triggered event result, the reverse deduction of the cause of the event triggering is displayed, and the source of the event triggering is clarified, thereby shortening the time to judge the event, shortening the time to deal with the event, improving the safe operation level of the nuclear power plant, and improving the economic efficiency of the nuclear power plant.

7. A nuclear power plant intelligent technical specification system, **characterized in that**, the nuclear power plant intelligent technical specification system comprises:
an input module (210), for obtaining a predetermined operating signal and a device state of a nuclear power plant by means of a nuclear power plant KNS system;
an operating condition judging module (220), for determining an operating condition of the nuclear power plant according to the device state;
a comprehensive judging module (230), for determining whether to trigger a predetermined event according to the operating signal, the operating condition, and a preset threshold; and
a processing module (240), upon determining to trigger a predetermined event, for activating the predetermined event and triggering processing measures and supervision requirements corresponding to the event, and simultaneously starting a timer to remind an operator to complete the processing measures of specification requirements within a specified time.

8. The nuclear power plant intelligent technical specification system according to claim 7, **characterized in that**, the nuclear power plant intelligent technical specification system further comprises a nuclear power plant technical specification database module, for establishing a nuclear power plant technical specification database according to specific content of the nuclear power plant technical specification and requirements of human-computer interaction, wherein the technical specifications database adopts the existing database of the nuclear power plant KNS system, comprising real-time database and relational database, where thresholds, event start times and event duration timings adopt real-time database for changing dynamically after triggering; while the systems involved, the corresponding operating condition, the definition name of the triggered event, the concrete measures of the event and the supervision requirement of the event adopt the relational database.

9. The nuclear power plant intelligent technical specification system according to claim 8, **characterized in that**, the nuclear power plant intelligent technical specification system further comprises a human-computer interaction module, for establishing a two-layer man-machine interface of the nuclear power plant technical specification according to the concrete content of the nuclear power plant technical specification and the requirement of man-machine interaction, wherein the two-layer man-machine interaction interface is associated with an intelligent technical specification judging system and technical specification database, to display the information activated by the technical specification database on the two-layer man-machine interaction interface, the information displayed comprises event, threshold, event start time, event timing, corresponding operation mode, event measures and event supervision requirements as required by the technical specification.

10. The nuclear power plant intelligent technical specification system according to claim 9, **characterized in that**, the two-layer man-machine interaction interface has the function of displaying cause and the path of the event triggering, when an event is triggered, according to the triggered event result, the reverse deduction of the cause of the event triggering is displayed, and the source of the event triggering is clarified, thereby shortening the time to judge the event, shortening the time to deal with the event, improving the safe operation level of the nuclear power plant, and improving the economic efficiency of the nuclear power plant.
